# EUROPEAN PATENT APPLICATION

(11) **EP 3 054 279 A1**
(43) Date of publication of application: **10.08.2016**
(21) Application number: 16154733.6
(22) Date of filing: 08.02.2016
(51) Int. Cl.: G01N 15/14, G06K 9/46

(54) **METHODS FOR CLASSIFICATION AND VISUALIZATION OF CELLULAR POPULATIONS ON A SINGLE CELL LEVEL BASED ON MICROSCOPY IMAGES**

(30) Priority: 06.02.2015 EP 15154186
(71) Applicant: St. Anna Kinderkrebsforschung e.V., 1090 Vienna (AT)
(72) Inventor: KROMP, Florian, 1090 Vienna (AT); TASCHNER-MANDL, Sabine, 1090 Vienna (AT)
(74) Representative: Loidl, Manuela Bettina

(57) **Abstract**

The present invention relates to a novel method for classification and visualization of cellular populations on a single cell level based on fluorescence microscopy images. The method is based on the combination of gating strategies adopted from FACS analysis and images of single cells cropped from multispectral fluorescence images. Thereby, visual information such as morphology or fluorescence marker distribution influences the way of setting the gates manually to define subpopulations in the sample. By using automated statistical methods subsequently, the accuracy of the manual gating is further refined.

## Description

### Field of the Invention

The present invention relates to a novel approach to quantification of biologically meaningful cell populations in imaging cytometry.

### Background Art

Cytometry deals with the analysis of biological samples consisting of a large number of cells with the goal to quantify populations in the sample, i.e. groups of cells of the same cell (sub-)type. The quantitative analysis of samples is important for the understanding of cellular mechanisms including the quantification of protein subcellular appearance or DNA elements.

In cytometry, each cell of a sample is described by several descriptive feature measurements. To enable the feature extraction, several parts of the cells have to be visualized, including the cell membrane, the nucleus and markers. To do so, labeled antibodies are used in combination with e.g. probes and dyes staining specific cellular components or compartments. Basically, antibodies are proteins attaching to specific cellular targets called antigens representing nuclear or cellular structures or proteins and genes. Antibodies are labeled with various cytochromes or fluorochromes to be visualized. Using differently labeled antibodies allows the visualization of different targets at the same time.

There are two basic methods for acquiring measurements on a single cell level: Flow Cytometry Measurement (FCM) and Fluorescence - (FM) or Brightfield Microscopy (BM). FCM devices measure light intensity of single cells floating in a fluidic stream, whereas BF and FM methods capture multispectral images of cells attached to glass slides. In contrast to FCM, both microscopic methods require image analysis techniques to extract signal intensities of single cells from the resulting multispectral images. Both techniques result in feature vectors extracted on a single cell level. The features have to be processed subsequently to obtain a meaningful interpretation of the underlying data.

When comparing BF/FM and FCM features, the discriminative power of FCM features is higher in general. Nevertheless, image analysis enables the researcher to perform analysis strategies including morphological features as the basis for a subsequent classification of cellular populations. Although a new generation of Imaging Flow Cytometers arose enabling a simultaneous measurement of signal intensities and acquiring images, FM/BM image analysis bears the advantage to relocate cells on the slide, which is not possible when using FCM technologies. Relocation on the slide enables the operator to use high magnifying lenses to investigate a cell in detail, which can be an advantage if marker expression pattern of the cell is difficult to analyze. Furthermore, grown cells as well as tissue sections can only be analyzed using FM/BF technologies. A main advantage of FM/BF methods is the analysis of subcellular localization, e.g. differentiating if antibodies are bound in the nucleus or cytoplasm of a cell.

Currently available gating strategies are either based on an operator guided, time-consuming, trial-and-error-approach as described in WO2012/140265 or a purely automated cluster selection as disclosed by Hamilton N.A. and Teasdale, R.D. (BMC Bioinformatics, Biomed Central, 2008, vol 9(81), 1-12.

WO2012/140265 discloses a method for visualizing cell images and analyzing the data from image-based cellular assays. WO2012/140265 describes a data processing system for visualization and statistical analysis of high-content screening data using hierarchical gating strategies on one- and bi-dimensional feature plots. A solution allowing efficient classification of cell populations characterized by weakly discriminative features is not available until now.

Hamilton N.A. et al. also describe an automated sub-cellular phenotype classification (The 2006 Workshop on Intelligent Systems, 2006, 1-6).

Hamilton and Teasdale proposed the methodology iCluster to visualize and analyze cellular images. For each cell plotted in iCluster, a vector reflecting the spatial relation of the feature values to feature values of all other cells is calculated, i.e. representing the differences between measured feature values. Subsequent, cellular images are plotted according to their spatial relations, resulting in a plot where cells holding similar feature values are plotted close to each other. If cells were associated with a manually assigned class membership additionally, the respective cellular images are marked with a colored rectangle, reflecting their class membership. This methodology enables a comparison between different biological experiments, providing powerful information by spatially arranged cellular images.

There are still unmet needs to provide very precise, user-friendly and highly reproducible means for increasing the cell classification accuracy when visualizing and analyzing cellular images.

### Summary of invention

The objective of the present invention was to develop a semi-automated analysis procedure enabling operators to achieve reliable quantification results without being image processing experts.

The objective is achieved by the provision of the embodiments of the present invention.

Specifically, the invention relates to a method for analyzing assorted cell populations from a biological sample using fluorescence microscopy images, comprising the sequential steps:
a) providing a set of images of separated cells, which cells are tagged with at least two target markers, each target marker corresponding to one or more specific feature(s) of interest and having a specific fluorescence signal channel,
b) selecting two of said specific features and at least one corresponding fluorescence signal channel and plotting the corresponding cellular images against the x and y-axes to obtain an image scatterplot,
c) applying a manual gate to select a set of images displaying a cell population class of interest, and optionally
d) selecting one or two specific features different from step b and plotting the corresponding cellular images against the x and y-axes to obtain an image scatterplot, and optionally
e) applying a manual gate to select a set of images displaying a cell population class of interest,
f) optionally repeating steps d) and e),
g) obtain a final set of images / image scatterplot of selected population classes representing all specific features of interest, and
h) analyzing the cell populations according to the specific features.

More specifically, the present invention relates to a method for analyzing assorted cell populations from a biological sample using fluorescence microscopy images, specifically fluorescence microscopy images, characterized in that the method comprises the sequential steps:
a) providing a set of cropped images of single cells, wherein said cells are tagged with at least two target markers, each target marker corresponding to one or more specific feature(s) of interest and having a specific fluorescence signal channel,
b) selecting two specific features and at least one corresponding fluorescence signal channel and plotting the corresponding cellular images against the x and y-axes to obtain an image scatterplot,
c) applying a gate, specifically a manual gate, to select a set of images displaying a cell population class of interest,
d) applying a machine learning refinement classifier and optionally
e) selecting one or two specific features different from step b and plotting the corresponding cellular images against the x and y-axes to obtain an image scatterplot, and optionally
f) applying a gate to select a set of images displaying a cell population class of interest,
g) applying a machine learning refinement classifier and
h) optionally repeating steps e) to g),
i) obtaining a final image scatterplot of selected population classes representing all specific features of interest, and
j) analyzing the cell populations according to the specific features.

A further embodiment of the invention relates to a method for analyzing assorted cell populations from a biological sample by fluorescence microscopy, comprising the sequential steps:
a) fluorescence tagging of the cells using selective target markers, each target marker corresponding to one or more specific feature(s) of interest and having a specific fluorescence signal channel,
b) subjecting said cells to fluorescence microscopy and generating multispectral images,
c) selecting separated cells by image segmentation based on one or more specific fluorescence signal channel(s),
d) cropping said images to obtain a set of cropped images of said separated cells,
e) selecting two of specific features and plotting the corresponding cellular images against the x and y-axes to obtain an image scatterplot,
f) applying a manual gate to select a set of images displaying a cell population class of interest, and optionally
g) selecting one or two specific features different from step e) and plotting the corresponding cellular images against the x and y-axes to obtain an image scatterplot, and optionally
h) applying a manual gate to select a set of images displaying a cell population class of interest,
i) optionally repeating steps g and h) and
j) obtain a final image scatterplot of selected population classes representing all specific features of interest, and
k) analyzing the cell populations according to the specific features.

A further embodiment of the invention relates to a method for analyzing assorted cell populations from a biological sample by fluorescence microscopy, comprising the sequential steps:
a) fluorescence tagging of the cells using selective target markers, each target marker corresponding to one or more specific feature(s) of interest and having a specific fluorescence signal channel,
b) subjecting said cells to fluorescence microscopy and generating multispectral images,
c) selecting separated cells by image segmentation based on one or more specific fluorescence signal channel(s),
d) cropping said images to obtain a set of cropped images of said separated cells,
e) selecting two of specific features and plotting the corresponding cellular images against the x and y-axes to obtain an image scatterplot,
f) applying a manual gate to select a set of images displaying a cell population class of interest,
g) applying a machine learning refinement classifier and optionally
h) selecting one or two specific features different from step e) and plotting the corresponding cellular images against the x and y-axes to obtain an image scatterplot, and optionally
i) applying a manual gate to select a set of images displaying a cell population class of interest,
j) applying a machine learning refinement classifier and optionally
k) repeating steps h to j) and
l) obtain a final set of images / image scatterplot of selected population classes representing all specific features of interest, and
m) analyzing the cell populations according to the specific features.

A further embodiment of the present invention relates to a method as described above, wherein the gate, specifically the manual gate, is a polygon defining an area on the scattered image plot classifying the cell population of interest. The cell population if interest can be located within the polygon or outside of the polygon.

A further embodiment of the present invention relates to the application of machine learning refinement classifiers that can use n-fold cross validation in combination with an ensemble of classification methods like Random Forests, Support Vector Machines or k-Nearest Neighbors. For each of the n cells in the dataset, the ensemble of classifiers is trained using n-1 training data (feature vectors) and the ensemble finally decides the assignment of the remaining cell. For increased classification accuracy, a preceding step of feature reduction using methods like Principal Component Analysis (PCA), Linear Discriminant Analysis (LDA) or boosting procedures like AdaBoost can be used.

A further embodiment of the present invention relates to a method as described above, wherein the most discriminative features are assigned to the x and y-axes of the image scatterplot.

A further embodiment of the present invention relates to a method as described above, wherein the most discriminative features displayed on the first image scatterplot are nucleus and/or cytoplasm segmentation.

A further embodiment of the present invention relates to a method as described above, wherein cells having similar features are positioned close to each other in the image scatterplot.

A further embodiment of the present invention relates to a method as described above wherein each specific feature or a combination of features of said cells displayed in the image scatterplot is marked by a colored rectangle.

A further embodiment of the present invention relates to a method as described above wherein the specific features are selected from morphological features and features of gray level histogram.

A further embodiment of the present invention relates to a method as described above, wherein the morphological features of the cells are roundness, perimeter, object size, solidity of cells.

A further embodiment of the present invention relates to a method as described above, wherein 1, 2, 3, 4 or more different morphological features are selected.

A further embodiment of the present invention relates to a method as described above, wherein the features of the gray level histogram are selected from mean intensity, median intensity and mean of 30% of brightest pixels.

A further embodiment of the present invention relates to a method as described above, wherein 1, 2, 3, 4, 5, 6, 7, 8, 9, 10, or more features are selected from gray level histogram.

A further embodiment of the present invention relates to a method as described above, wherein the gray level histogram is based on pixels having a distance of more than 2 pixels to the border of the cell nucleus or the cell cytoplasm.

A further embodiment of the present invention relates to a method as described above, wherein texture features are extracted from gray level histogram of the images after applying an operator (local binary patterns) or a filter kernel (Gaussian wavelets), specifically the mean and variance of gray level histogram.

A further embodiment of the present invention relates to a method as described above, wherein the specific features are selected by determining selection values, specifically random forests (RDF) or principal component analysis (PCA).

A further embodiment of the present invention relates to a method as described above, wherein the features are selected using RDF, specifically by setting the parameters of the RDF to a minimal leaf size of 10 and an ensemble of 40 trees and growing the RDF 10 times and selecting the features having an overall mean of importance of >0.

A further embodiment of the present invention relates to a method as described above, wherein the target markers are antibodies specific to cellular targets, or DNA dyes, fluorescent probes specific for DNA sequences, fluorescent dyes specific for certain cellular components or compartments.

A further embodiment of the present invention relates to a method as described above, wherein the biological sample can be tissue, body fluid, cells from cell culture, or extracted cellular compartments thereof.

A further embodiment of the present invention relates to a method as described above, wherein cells not comprising a specific feature are discriminated from the image scatterplot.

A further embodiment of the present invention relates to a method as described above, wherein features are selected using an algorithm consisting of statistical methods, specifically principal component analysis.

### Brief description of drawings

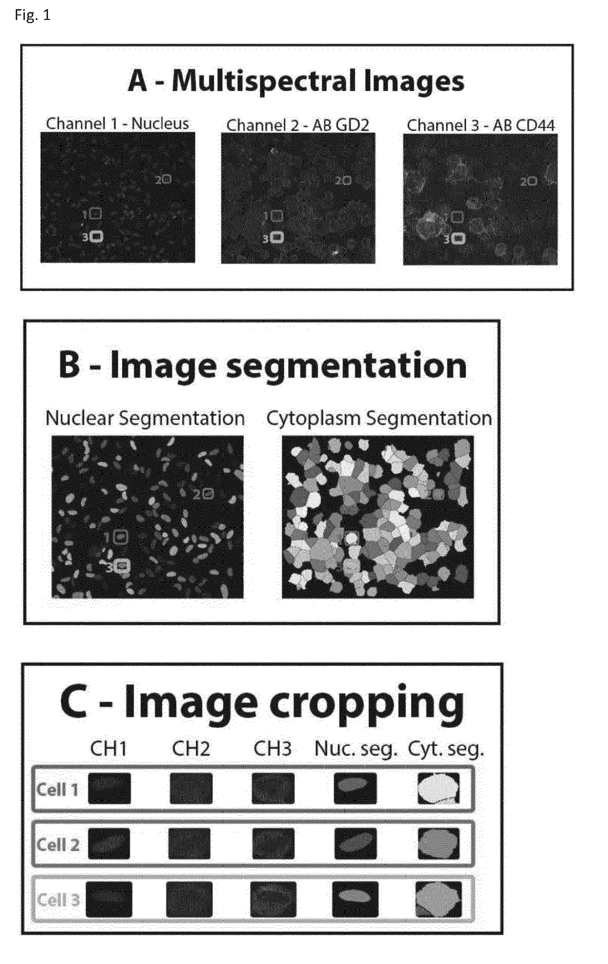

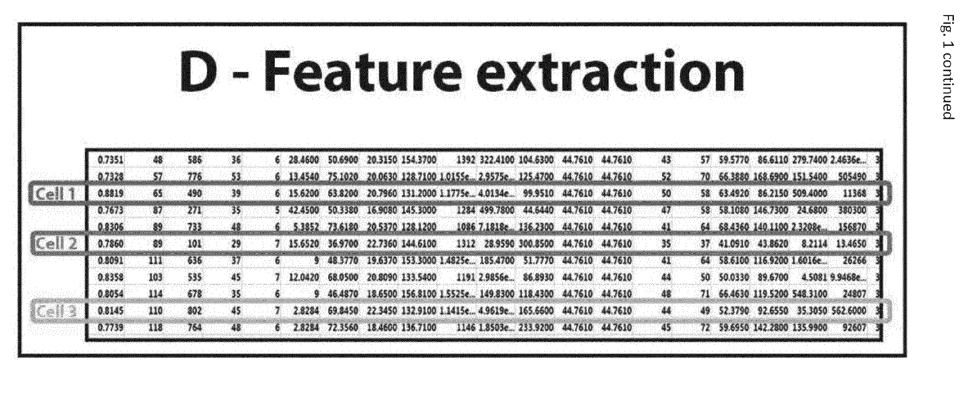

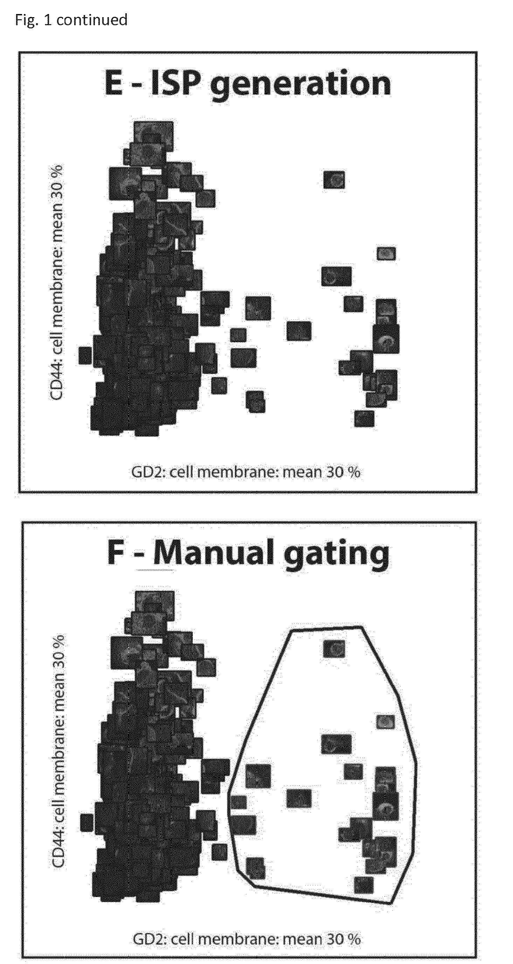

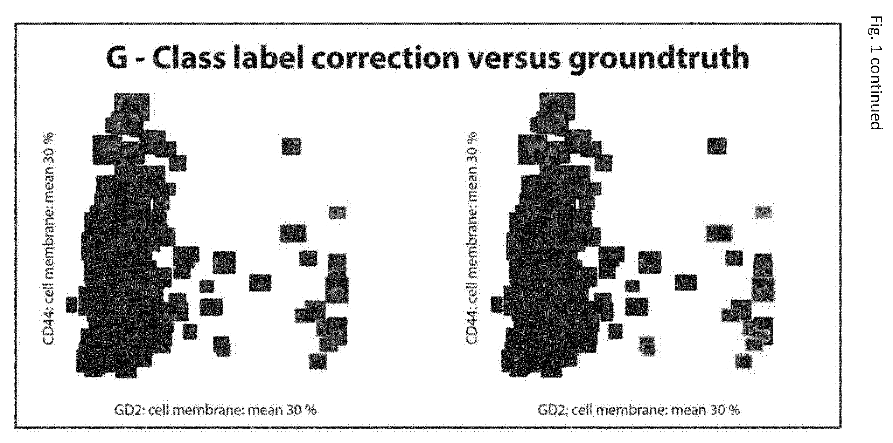

Figure 1. Proposed workflow for cellular population quantification illustrated on a neuroblastoma dataset. Preprocessing (A-D) and contribution of this invention (EG);
   (A) Channels of the multispectral image each outlining a different cellular target,
   (B) Segmented nuclear image (left) based on Channel 1 and cytoplasm image (right) based on Channels 2 and 3,
   (C) Images of observations 1 to 3 cropped in all channels of the multispectral image and in the segmented images, as marked in images in A and B,
   (D) Extract of the resulting feature matrix, rows corresponding to observations and columns corresponding to feature vectors; features vectors of observations 1 to 3 highlighted,
   (E) Image Scatter-Plot created using two features selected by the operator; pseudocolors are used to overlay the cropped images of A,
   (F) Observations were labeled manually (red) by setting a gate (blue) to outline a cellular population,
   (G) Results of automated label correction to compensate for overlapping populations (violet, left image) and groundtruth (green, right image).

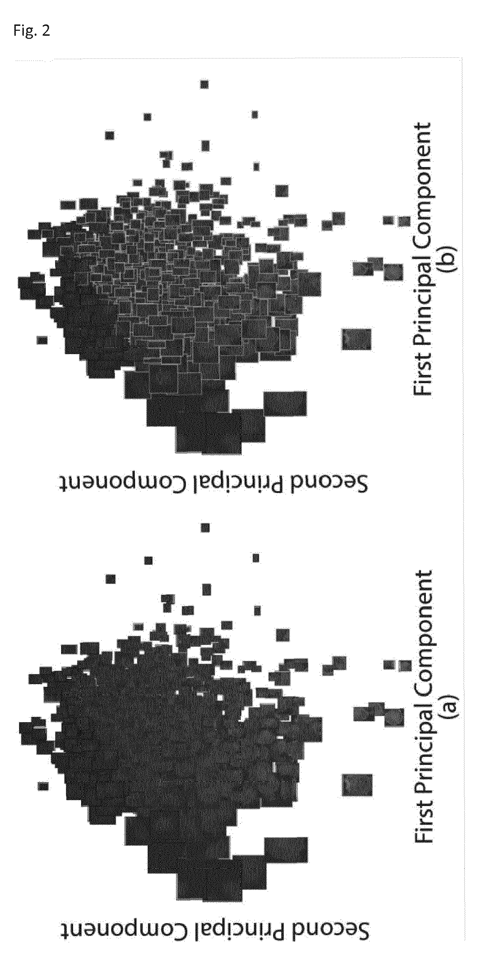

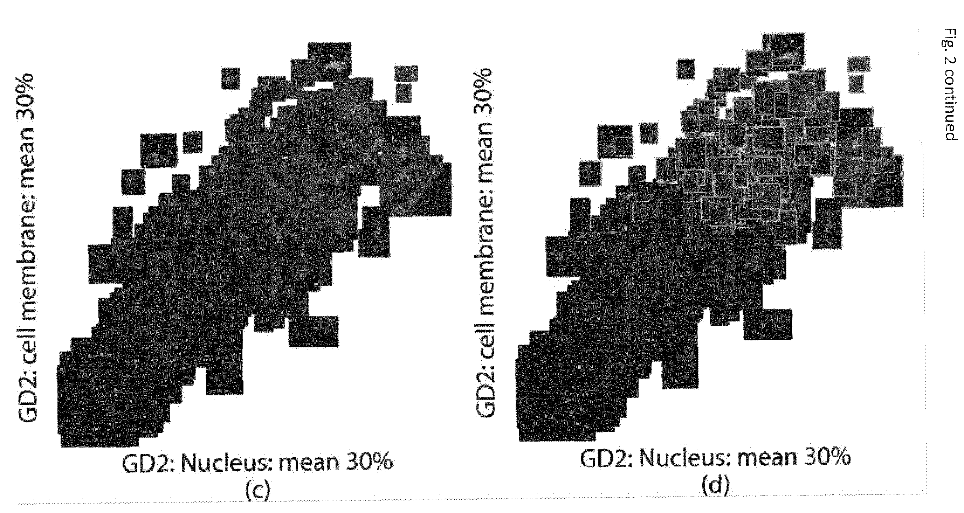

Figure 2. Quantification of antibody positivity in a CD44 and GD2 stained neuroblastoma sample.
   (a) Result of labeling CD44 positive cells indicated by red rectangles; only the channel including CD44 is visualized in the ISP.
   (b) Result of the majority vote for CD44 positivity, indicated by green rectangles
   (c) Result of labeling GD2 positive cells indicated by red rectangles; GD2 and nucleus channel are overlaid
   (d) Result of the majority vote for GD2 positivity, indicated by green rectangles.

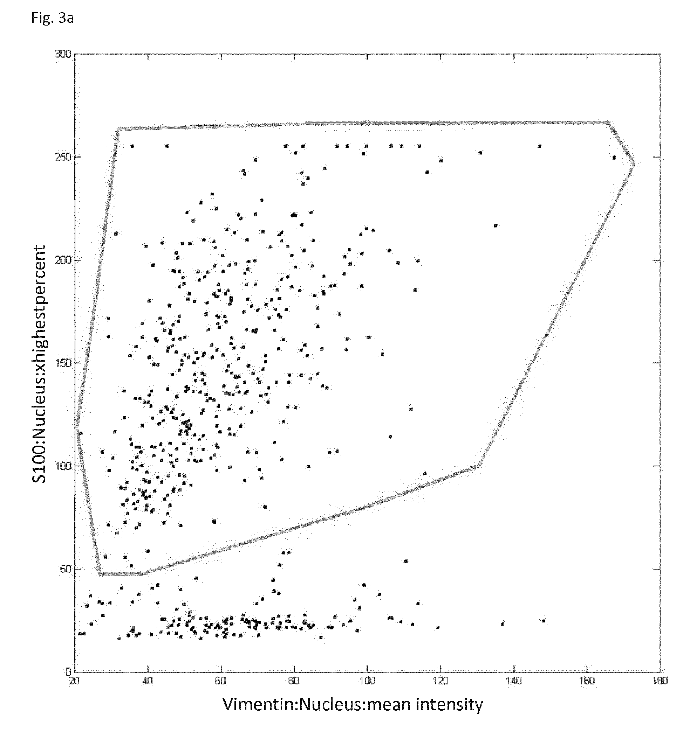

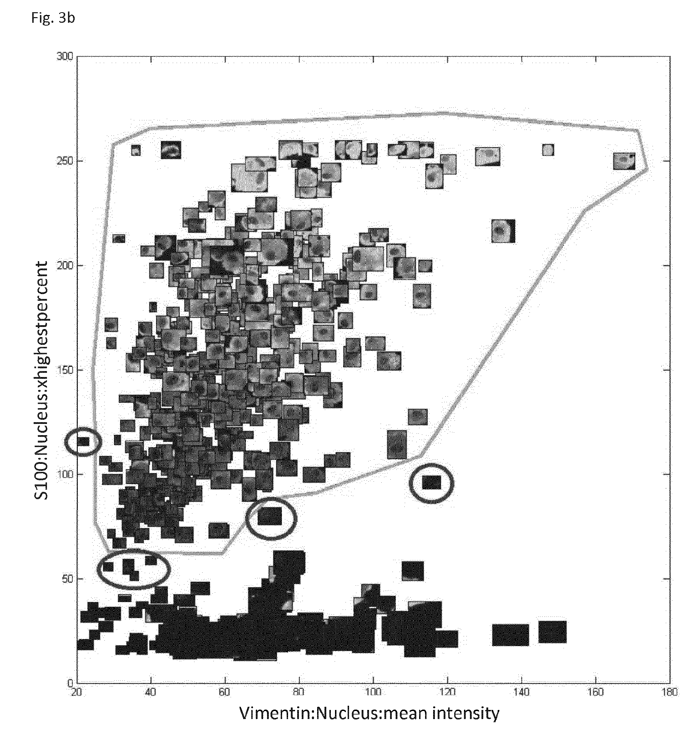

Figure 3: Outlining the advantage of image-scatterplots compared to standard scatterplots; the marker vimentin was plotted against the marker S100 to gate for S100 positive cells;
   (a) standard scatterplot including a gate (green line) set to determine S100 positive cells, based on the density distribution of dots
   (b) image-scatterplot including a gate (green line) set to determine S100 positive cells, based on the distribution of clipped images and their antibody staining pattern; single cells were excluded from the gate (red circles) according to their antibody staining pattern.

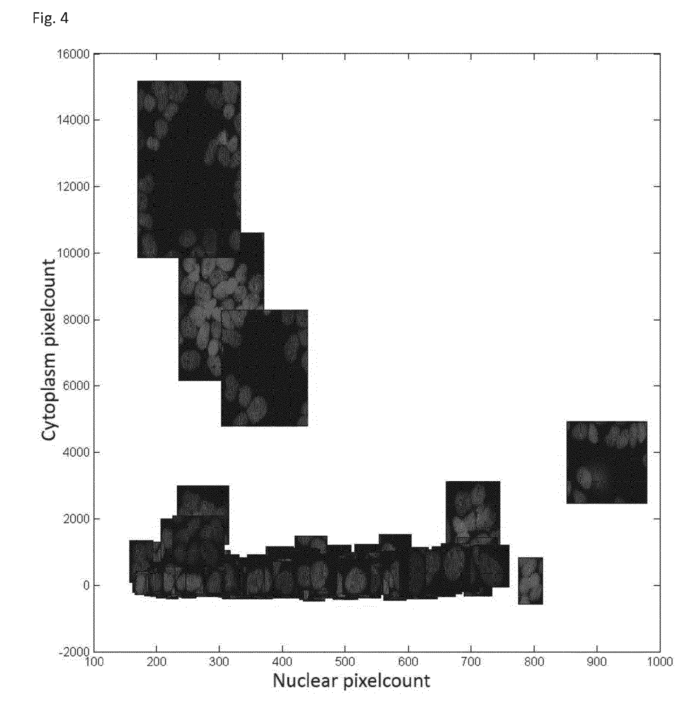

Figure 4: Image-scatterplot showing clipped images displaying nuclear information; pixel- count calculated from the nucleus mask is plotted on the x-axis; pixelcount calculated from the cytoplasm mask is plotted on the y-axis; the plot was created to enable to set a gate only including correctly segmented nuclei; using this plot we can immediately see images displaying multiple nuclei, which have to be excluded for further analysis. The images showing multiple nuclei are a result of incorrect nuclear or cytoplasm segmentation.

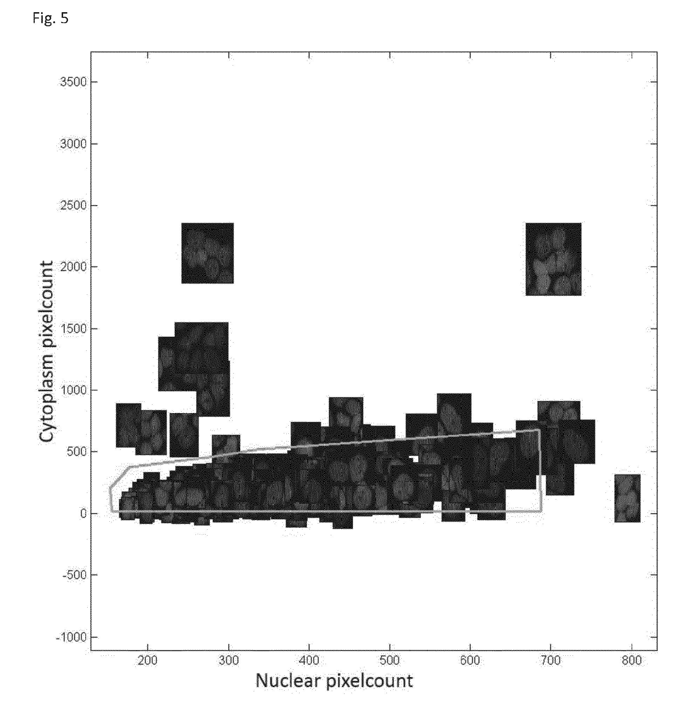

Figure 5: Zoomed image-scatterplot showing clipped images displaying nuclear information; pixelcount calculated from the nucleus mask is plotted on the x-axis; pixelcount calculated from the cytoplasm mask is plotted on the y-axis; the plot was zoomed in to be able to set a gate (green line) to precisely define correctly segmented nuclei; we call the resulting class of cells inside the gate 'correctSegmentedNuclei'; further classes we define by setting gates are referred to this class to determine the ratio of included cells in comparison to the number of all other cells.

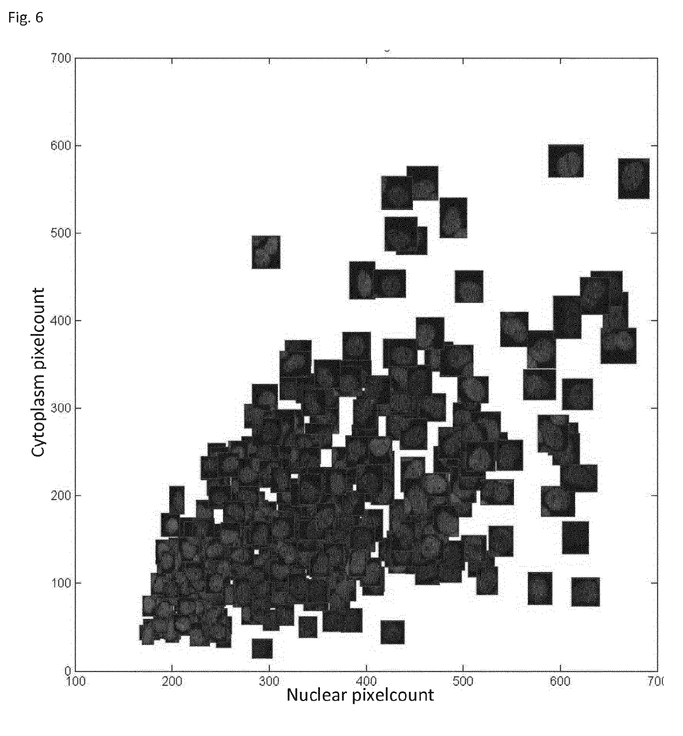

Figure 6: Image-scatterplot showing clipped images displaying nuclear information; pixelcount calculated from the nucleus mask is plotted on the x-axis; pixelcount calculated from the cytoplasm mask is plotted on the y-axis; only cells inside the gate defining cells of class 'correctSegmentedNuclei' are displayed; this plot is used to prove, if only correct segmented nuclei remain for analysis.

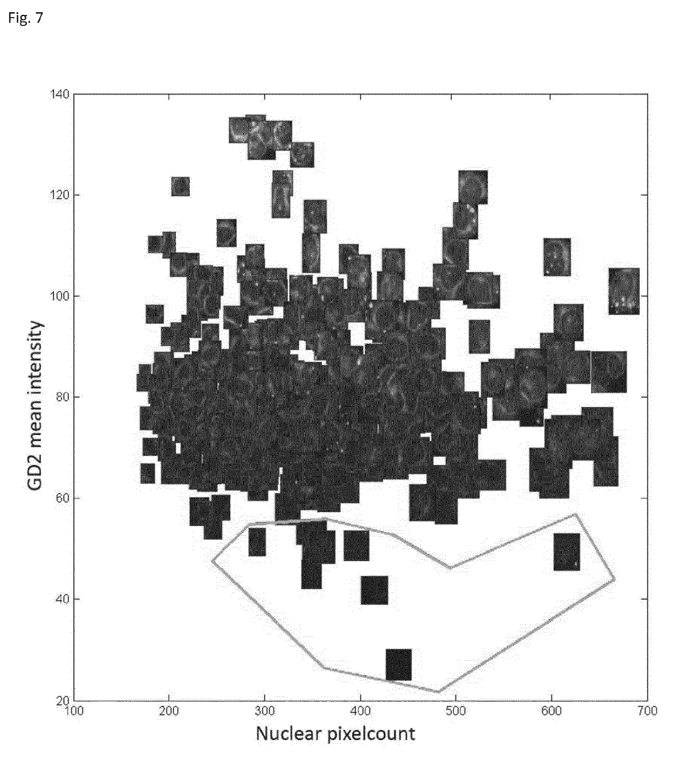

Figure 7: Image-scatterplot showing images displaying GD2 marker information; the feature 'pixelcount' calculated from the nucleus mask is plotted on the x-axis; the feature 'mean intensity' calculated from the FITC channel (representing a marker called GD2) is plotted on the y-axis; this plot is used to gate for cells showing GD2 marker expression pattern; because only a few cells do not express the marker GD2, we set a gate to include cells not showing a GD2 marker expression pattern; the gate is displayed as a green line, resulting class of cells is called 'GD2-'.

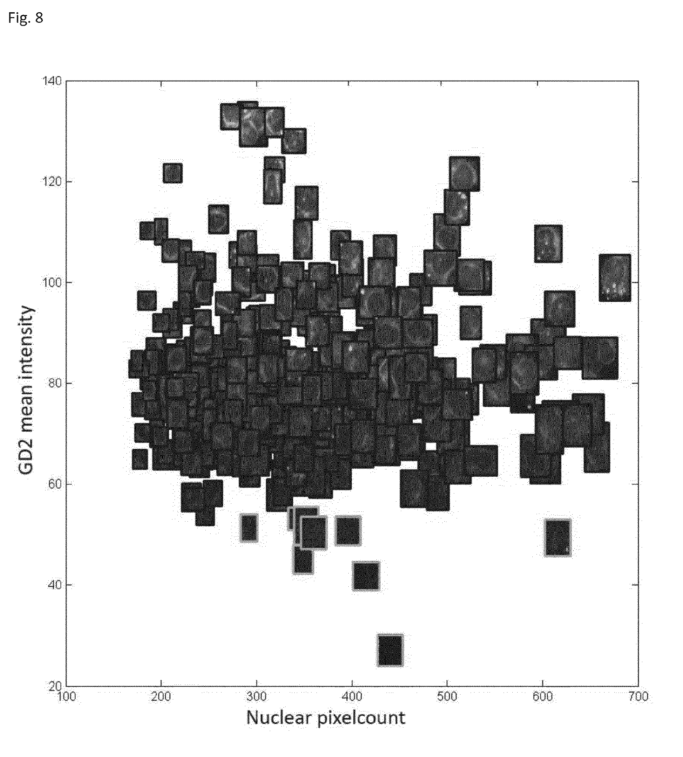

Figure 8: Image-scatterplot showing clipped images displaying GD2 marker information; pixelcount calculated from the nucleus mask is plotted on the x-axis; mean intensity calculated from the FITC channel (representing a marker called GD2) is plotted on the y-axis; cells showing GD2 marker expression pattern are calculated by excluding cells of class 'GD2-' from cells of class `correctSegmentedNuclei', resulting class of cells is called 'GD2+'; cells classified as being of class 'GD2+' are marked with a blue rectangular, cells classified as being of class 'GD2-' are marked with a green rectangular.

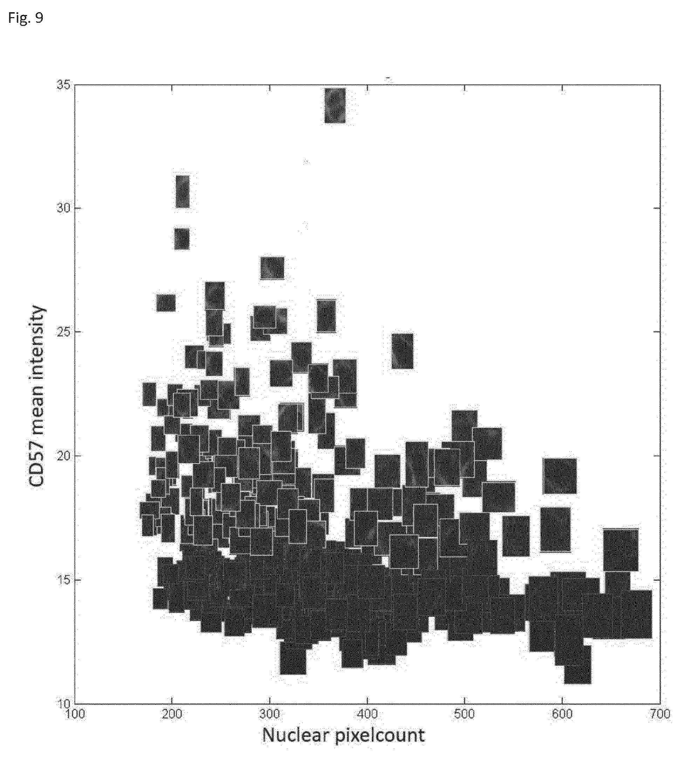

Figure 9: Image-scatterplot showing clipped images displaying CD57 marker information; pixelcount calculated from the nucleus mask is plotted on the x-axis; mean intensity calculated from the TRITC channel (representing a marker called CD57) is plotted on the y-axis; cells not showing CD57 marker expression pattern were gated resulting in a class called 'CD57-'; cells showing CD57 marker expression pattern are calculated by excluding cells of class 'CD57-' from cells of class 'correctSegmentedNuclei', resulting class of cells is called 'CD57+'; cells classified as being of class 'CD57+' are marked with a yellow rectangular, cells classified as being of class 'CD57-' are marked with a violet rectangular.

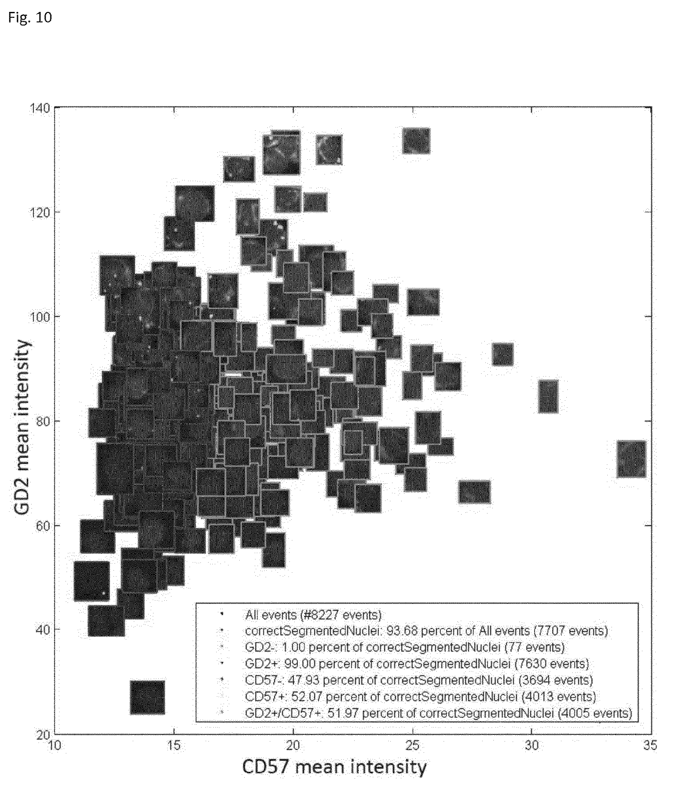

Figure 10: Image-scatterplot showing clipped images displaying DNA information (DAPI channel) representing the nucleus, CD57 marker information and GD2 marker information; mean intensity calculated from the TRITC channel (representing a marker called CD57 is plot- ted on the x-axis; mean intensity calculated from the FITC channel (representing a marker called GD2) is plotted on the y-axis; cells showing CD57 antigen expression as well as GD2 antigen expression were calculated by the intersection of cells from class 'CD57+' and 'GD2+'; resulting class of cells is called 'GD2+/CD57+', marked with an orange rectangle; cells of class 'CD57-' are marked with a violet rectangle; in the figure legend, the constructed class structure is displayed.

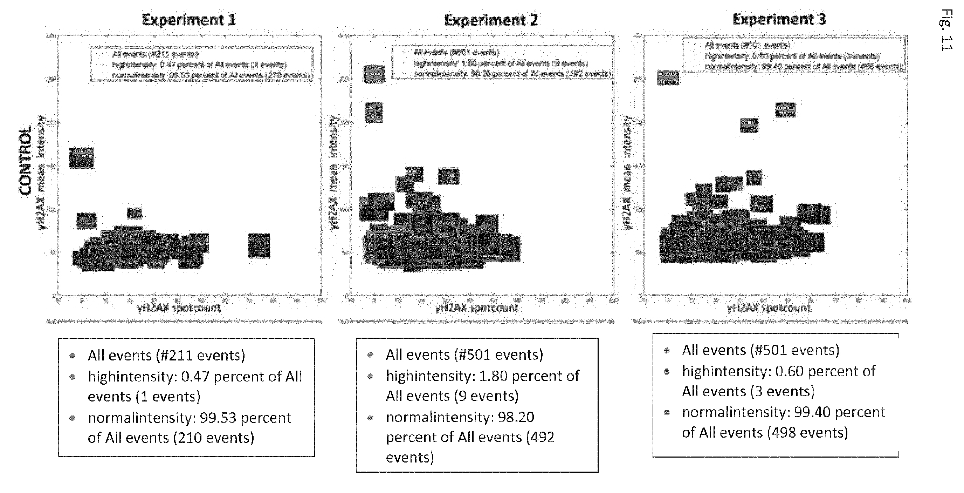

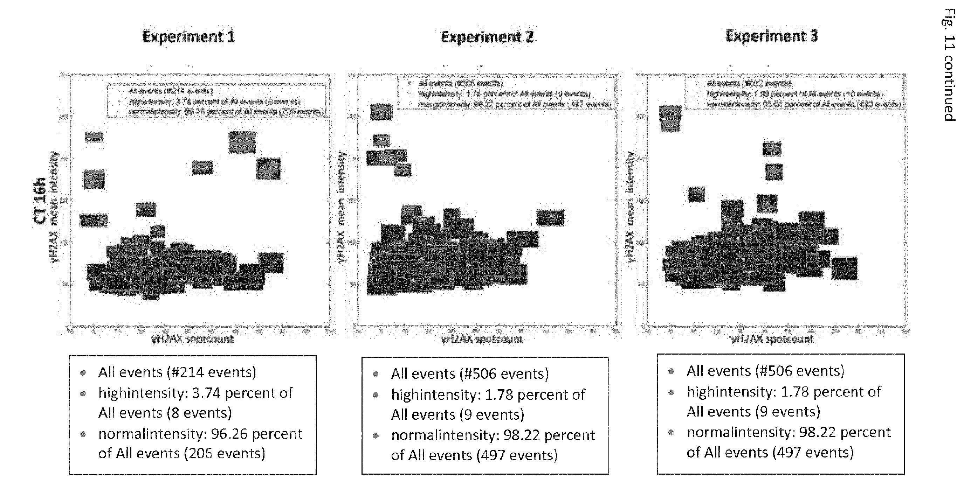

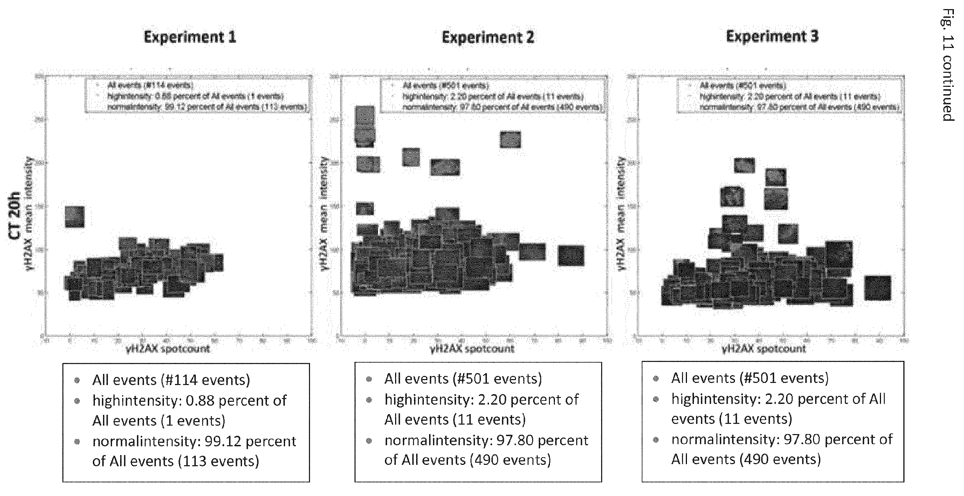

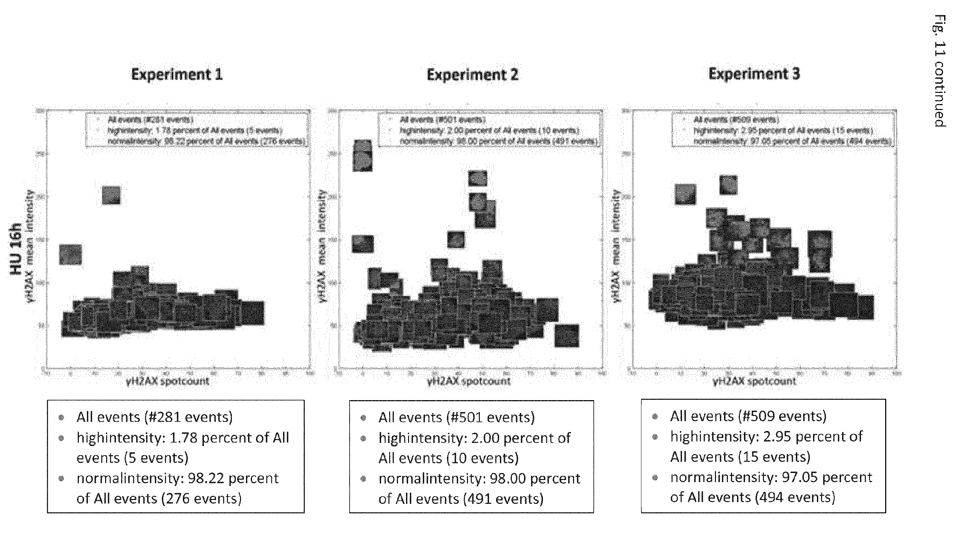

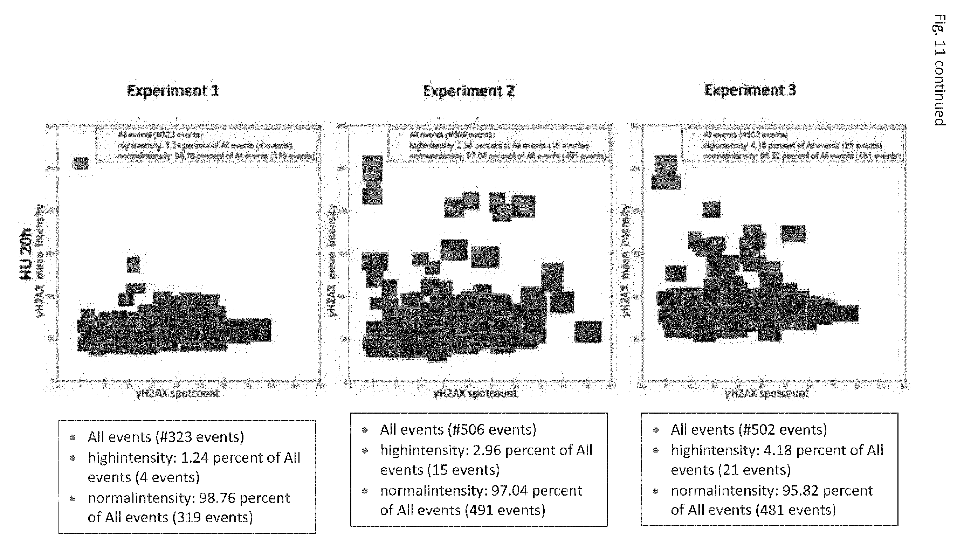

Figure 11: Scatterplots of features γH2AX spotcount and γH2AX mean intensity; 3 Experiments carried out in order to quantify effects of different treatments (Hydroxyurea, Camptothecin) to neuroblastoma cells (STANB10). Treatments evaluated after 16h btw. 20h.; x- axis: γH2AX spotcount,y-axis: γH2AX mean intensity; treatment of Camptothecin for 16 hours CT16h, treatment of Camptothecin for 20 hours CT20h, treatment of Hydroxyurea for 16 hours HU16h, treatment of Hydroxyurea for 20 hours HU20h.

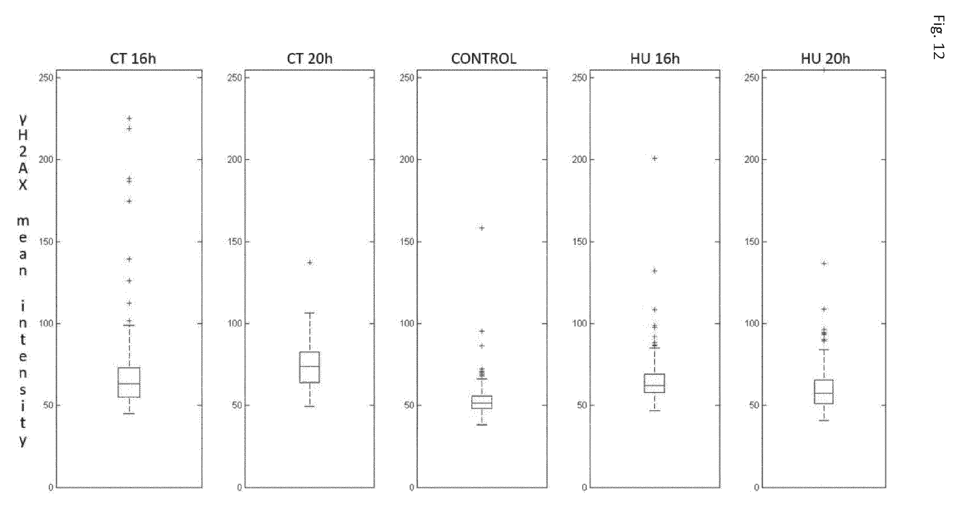

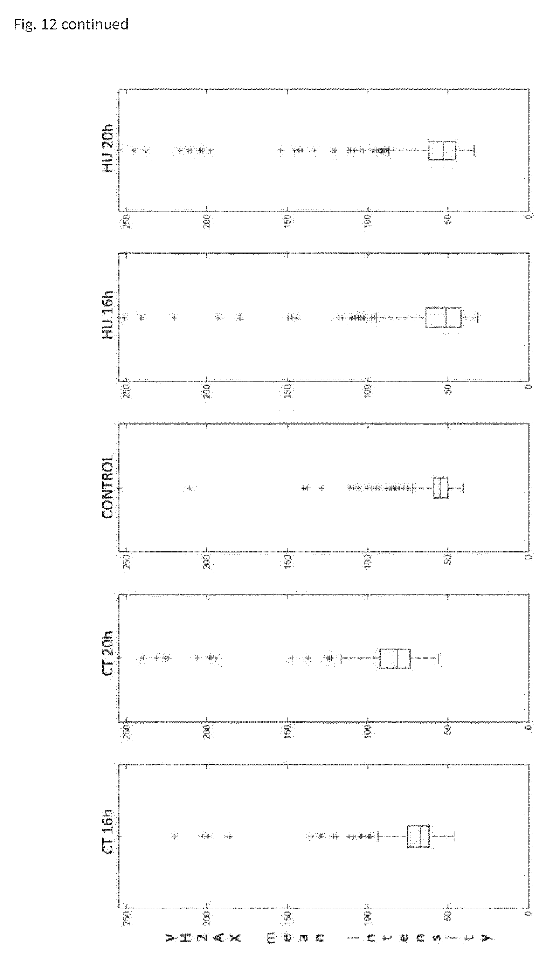

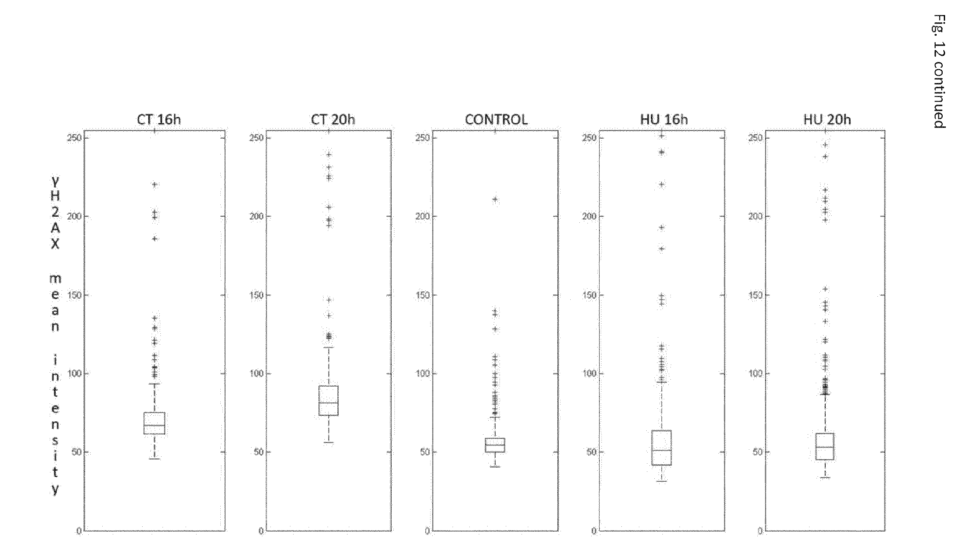

Figure 12: Boxplots of feature γH2AX mean intensity; 3 Experiments carried out in order to quantify effects of different treatment conditions (Hydroxyurea, Camptothecin) of neuroblastoma cells (STANB10). Treatment conditions were evaluated after 16h btw. 20h; treatment of Camptothecin for 16 hours CPT16h, treatment of Camptothecin for 20 hours CPT20h, treat- ment of Hydroxyurea for 16 hours HU16h, treatment of Hydroxyurea for 20 hours HU20h; (a) Experiment 1 (b) Experiment 2 (c) Experiment 3.

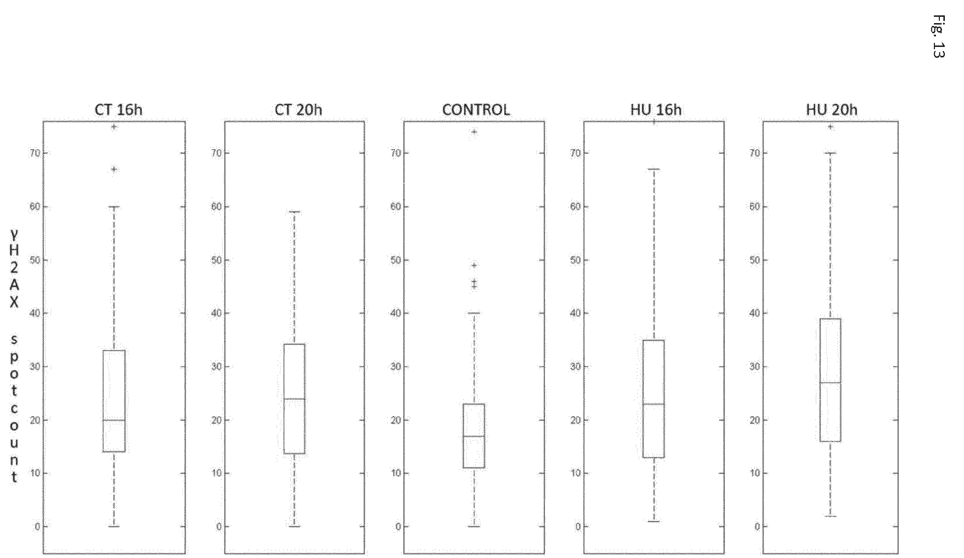

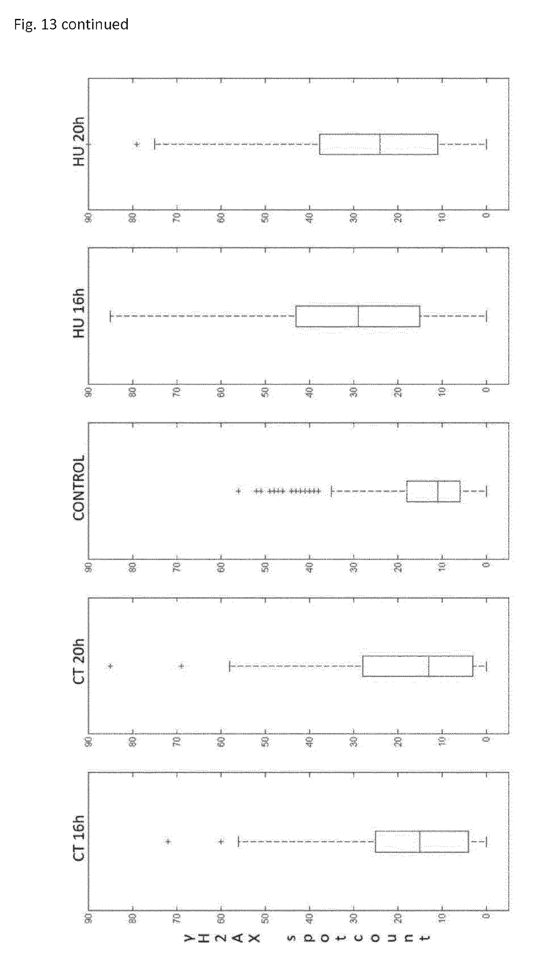

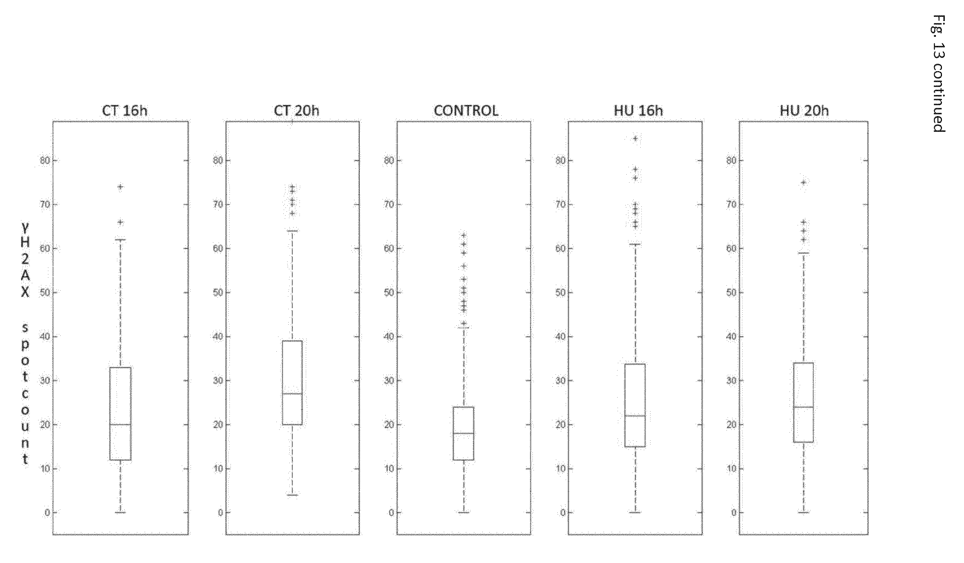

Figure 13: Boxplots of feature γH2AX spotcount; 3 Experiments carried out in order to quantify effects of different treatment conditions (Hydroxyurea, Camptothecin) to neuroblastoma cells (STANB10). Treatment conditions were evaluated after 16h btw. 20h; treatment of Camptothecin for 16 hours CPT16h, treatment of Camptothecin for 20 hours CPT20h, treatment of Hydroxyurea for 16 hours HU16h, treatment of Hydroxyurea for 20 hours HU20h; (a) Experiment 1 (b) Experiment 2 (c) Experiment 3

### Description of embodiments

The inventors developed a method for analyzing assorted cell populations from a biological sample using fluorescence microscopy images (see Figure 1).

The gating strategies derived from FCM domain were adopted to label observations in scatterplots and combined with the cropped images stored during the process of image analysis. This leads to a powerful visualization which the inventors call Image Scatter-Plots (ISP). ISP is embedded in an analysis workflow used to classify cellular populations sequentially. Since the human brain is able to analyze and classify patterns fast, this skill was used to guide the quantification process in the analysis. In contrast to FCM gating, single observations or also groups of observations gated in the ISP can be relocated in the multispectral images or even directly on the slide. Thus, results of the gating strategies can be verified easily and intuitively increase the researchers confidence in the analyzed data.

The combination of cropped images and scatter plot in image scatter plots does not only allow data visualization, but surprisingly allows direct, intuitive operator guided gating within one step, resulting in improved classification accuracy. Gating refinement by machine learning further increases accuracy.

Typically, the relevant populations cannot be selected by simple polygonal regions. They do not form well-separated clusters in the ISP, and even if multiple gates drawn in different ISP are combined, there are a substantial number of false assignments. This is also due to the use of "weak" image features. To correct for the false assignments, machine learning refinement classifiers are used to further increase classification accuracy. The proposed methodology for quantification of cellular populations is embedded in a workflow as presented in Figure 1. While the preprocessing consisting of image segmentation and feature extraction is a widely explored field, the inventors introduce the gating strategies applied on ISPs as a novel method for cellular population classification and thus, quantification. Combining manual input with machine learning strategies to correct for overlapping cellular populations enables a reliable quantification for the samples and validation of the present invention.

Unless specifically indicated otherwise, the expression "signal" as used herein is intended to encompass antibodies visualized using fluorescence labelled markers.

Herein, the term "image" refers to a microscopy image containing at least one channel (e.g. bright field, fluorescence channel) or an overlay of at least 2 channels.

Herein, the term "cropped image" refers to a specific part of an image containing only one cell, specifically obtained by image segmentation.

Herein, the term "scatter plot" refers to a type of mathematical diagram using Cartesian coordinates to display values for typically two variables for a set of data, i.e. plotting values/features on the x and y-axis.

Herein, the term "feature" refers to a numerical value +/- unit as the result of the measurement of a cellular property, such as cell morphology, texture or fluorescence signal.

Features are "weak" if they are not highly discriminating different cellular populations.

The term "feature space" relates to the n-dimensional space spanned up by the n different features used to characterize all present cells.

"Gray level histogram" is a histogram that counts the number of pixels for each gray value of a cell within a cropped image.

Features of the gray level histogram refer to the feature measurement using the gray level histogram e.g. mean intensity, median intensity, mean intensity of the thirty percent of brightest pixels of a cell within a cropped image

Morphological features are feature measurements describing the morphology of a cell within a cropped image e.g. roundness, perimeter, size.

The term "gate" according to the invention refers to a region of interest in the bidimensional feature space projection (e.g. scatter plot)

The term "gating" means the classification of cells of interest by setting a gate; said gating can be done by operator manually with/without machine learning refined.

The term cell is used for any biological cells, cell fractions or cellular compartments, including, but not limited to the nucleus, cytoplasm, cytoplasmic or nuclear membrane.

An image scatterplot according to the invention is a plot of cropped images of cells which are arranged according to the feature values plotted on the x- and y-axis. Image scatterplots thus provide a set of cropped images that are displayed in a bi-dimensional feature space, the value of one feature determining the position on the horizontal axis, the value of the other feature determining the position on the vertical axis. As an example, pixelcount calculated from one mask is plotted on the x-axis; pixelcount calculated from a second mask is plotted on the y-axis; the plot can be created to enable to set a gate only including a specific feature. Specifically, the image scatter plot can contain one or more than one, i.e. two or more features plotted on the x-axis and one or more than one, i.e. two or more features plotted on the y-axis.

According to the invention, the terms "cropped" and "clipped" can be used interchangeably.

The term "machine learning refinement classifier" used in this context relates to an automatic correction of the selected data that is performed after setting a gate. The aim is to correct the resulting data set for possible false assignments, especially occurring in case of highly overlapping cellular populations.

For example, an automatic correction of the data can be performed after each manual gate to improve the respective data set, i.e. the set of images, specifically to correct possible false assignments in case of highly overlapping cellular populations.

Examples of machine learning refinement classifiers can be, but are not limited to the use of n-fold cross validation in combination with an ensemble of classification methods like Random Forests, Support Vector Machines or k-Nearest Neighbors.
For each of the n cells in the dataset that have been assigned to one of two possible classes by setting a gate, all members of the classifier ensemble are trained using n-1 training data (feature vectors). Each member of the classifier ensemble is used to classify the said cell and the majority of classifiers that vote for the same class decide the final class assignment. To achieve a higher classification accuracy, a preceding step of feature selection/reduction using methods like Principal Component Analysis (PCA), Linear Discriminant Analysis (LDA) or boosting procedures like AdaBoost can be used.

Herein, the term "fluorescence channel" refers to the visualization of a certain fluorochrome using a proper filtercube. A fluorochrome (or fluorophore) is a fluorescent chemical compound that can re-emit light upon light excitation. Fluorophores typically contain several combined aromatic groups, or plane or cyclic molecules with several Π bonds. DAPI is an example for a nucleic acid dye whereas TRITC, FITC, DEEPRED are examples for reactive and conjugated dyes. The number of fluorescence channels used depends on the number of antibodies visualized and the number of antibodies depends on the cellular region in which antigens are expected to be expressed.

As used herein, the term "image segmentation" refers to a process of detecting and furthermore depicting objects in an image. Objects are depicted by assigning labels to each pixel of the image, stored in a new image called segmentation mask. Every object within the segmentation mask is outlined by pixels of the same value.

The output of a segmentation process enables to calculate features of every segmented object, represented by feature vectors. Feature vectors of all segmented objects are arranged in a matrix, called feature matrix. From this it follows that the elements of each row of a feature matrix are numerical values representing the various features of a specific cell; different rows contain the information of different cells. Features represent cellular properties like nuclear size, mean nucleus intensity, mean signal intensity, or size and shape of nucleus. Some features like nucleus roundness are calculated on segmented objects in the nuclear segmentation mask, other features like mean signal intensity are calculated by superimposing the nuclear or cytoplasm mask to images of other channels.

The pixelcount corresponds to the nuclear size, i.e. the amount of segmented object's pixels. The pixelcount can be calculated for segmented nuclear objects as well as for segmented cytoplasm objects. To calculate the pixelcount for a distinct object (i.e. nucleus), all pixels in the segmentation mask holding the value of the corresponding object are counted.

To calculate the mean intensity for a particular segmented object, the nuclear or cytoplasm segmentation mask is superimposed on the raw signal image of interest. All pixels of the resulting image not covered by the segmented object are set to 'not a number' ('NaN'), a value responsible for not being considered when calculating the mean of all gray values. Retaining gray values not equal to 'NaN' are summed up and divided by their number.

As used herein, the term "mean background intensity" is the mean intensity of non-nuclear pixels. It serves as a preliminary quantify for the spotcount. The mean background intensity is calculated using Otsu thresholding (A Threshold Selection Method from Gray-level Histograms. IEEE Trans- actions on Systems, Man and Cybernetics, 9(1):62-66, 1979), but with a threshold value subtracted by 20. This decrease compensates for the effect that background pixels neighboring nuclear pixels appear brighter than they should. Dealing with the background only, it is intended to exclude nuclear pixels influencing the background intensity. The result of the threshold image is a binary image mask, where background pixels are set to a value of zero. The mask has to be inverted and superimposed on the image showing the signal channel. Pixels not covered by the created mask are set to 'NaN', and the mean intensity of remaining pixel values is computed.

The mean intensity of an object doesn't reflect the subjective impression of an operator, if the signal expressed in the nucleus appears granular. The reason why the calculated mean intensity is lower than expected by visual inspection is that there are more background pixels decreasing the value of the feature mean intensity. Therefore the feature "mean of x-percent brightest pixels" is introduced.

The mean of x-percent brightest pixels feature is calculated analogously to the calculation of the feature mean intensity to extract relevant gray values. Though, the gray values are sorted to calculate the mean intensity of the highest x-percent of the values.

Operators try to find populations that can be separated from all other cells in multiple scatterplots by using gates. A gate is an n-sided, closed polygon, including a region of interest in a two-dimensional scatterplot. Its coordinates depend on the features plotted against each other. Gates are used to determine the ratio of included cells in comparison to other cells in the same sample. By applying hierarchical gating strategies, operators are enabled to exclude irrelevant cells step by step, until the respective population of interest is found. Applying manual gates to classify populations in two-dimensional scatterplots is difficult. To overcome this problem, a new way how to analyze a feature matrix is presented.

Cellular images are clipped and stored during the process of creating the feature matrix in order to visualize them within scatterplots subsequently. Images are arranged according to the feature values plotted on the x- and y-axis. In contrast to the analysis of an FCM feature matrix, the operator is not only dependent on density distributions in scatterplots, furthermore, gating is supported by the visualization of clipped images. Thus, objective evaluation of clipped cellular images is used to distinguish between different types of cellular populations. The possibility of visualizing every single cell is a tremendous advantage compared to flow cytometric approaches as the latter technique does not allow a detailed analysis of individual cells. Thus, a detailed examination of all cellular features such as shape, granularity, antigen distribution etc. is possible on one graphic presentation allowing a much more defined classification of the cells. An example illustrating the advantages of image-scatterplots in comparison to standard scatterplots is presented in Figure 3. As clearly observable in the figure, image scatterplots enable the tremendous advantage to include or to exclude single cells within gates according to their antibody staining pattern.

In contrast to the work of Hamilton and Teasdale (Visualizing and clustering high throughput sub-cellular localization imaging. BMC Bioinformatics, 9, 2008), the inventive method was altered by enabling the operator to choose which features to use for the two dimensional projection. Furthermore, it is possible to load multispectral images, so the user, further called the operator, can display the opacity for every channel, emphasizing the channel of interest. The underlying aim is to set gates to outline the population of interest. In contrast to an FCM analysis, the operator is supported by the visualization of the marker expression pattern and nucleus morphology. Thus, different populations can be classified intuitively and efficiently even if the different populations strongly overlap in the 2-dimensional projection.

A prerequisite for antibody quantification and for a subsequent cellular classification is a robust image segmentation algorithm. Segmentation is the process of outlining distinct objects, resulting in a new image of the same size as the analyzed image, called segmentation mask. Two types of images were segmented, depending on the location of the antibodies of interest: the nuclear image and the cytoplasm image, see Figure 1B for an example.

The Gradient Energy Tensor was used for nuclear image segmentation (Kromp F., et al, Semi- automated segmentation of neuroblastoma nuclei using the gradient energy tensor: A user driven approach. In SPIE Proceedings of ICMV 2014, in Press, Milano, 2014.). To obtain a cytoplasmic segmentation, the image channels visualizing cellular surface markers were used. These markers are membrane bound, but represent the cytoplasm due to out-of-focus fluorescence signals. The images are simply added and the resulting image is transformed into a binary image using the Otsu threshold (A threshold selection method from gray-level histograms. Automatica, 11 (285-296):23-27, 1975). The inventors use the nuclear segmentation mask as the reference points for a distance transformation subsequently. Finally, the watershed algorithm is used to split touching cells based on the distance transformed image.

To enable a generation of an ISP after feature measurement, the input images being subject to the analysis have to be cropped. Thus, a minimal bounding box containing the segmented object is cropped for each channel of the multispectral image, for each object separately. Usually, antibodies are located either in the nucleus or in the cytoplasm, depending on the targeted antibody. Thus, a region containing either the nucleus or the cytoplasm region is cropped. In Figure 1C, images of the nuclear as well as of the antibody channels are cropped.

Three types of features, morphological features, features of the gray level histogram and textural features are used. Morphological features include roundness, perimeter, object size (nuclear and cytoplasm) and solidity. Features of the gray level histogram include mean intensity, median intensity and mean of the 30 percent of brightest pixels. Each of these features is measured using the nuclear and the cytoplasm mask, respectively, applied to the raw images by simple multiplication. Texture features are features extracted from the gray level histogram of images filtered with a filter kernel. Local binary patterns (LBP) (Ojala T. et al., Multiresolution grayscale and rotation invariant texture classification with local binary patterns. Pattern Analysis and Machine Intelligence, IEEE Transactions on, 24(7):971-987, 2002) are applied using a radius of 1, 2 and 3 and either 8, 16 or 32 neighbours to the cropped images. Moreover, Gabor wavelets (Buciu I. and Gacsadi A.. Gabor wavelet based features for medical image analysis and classification. In Applied Sciences in Biomedical and Communication Technologies, 2009*.* ISABEL 2009. 2nd International Symposium on, pages 1-4. IEEE, 2009) using three scales and 8 orientations are applied to the cropped images as well.

To compensate for instable texture representations close to the border of the nucleus or the cytoplasm, only pixels having a distance of more than 2 pixels to the border of the nucleus or the cytoplasm are used, indicated by the respective mask, to calculate the gray level histogram in case of texture features. For feature extraction, the mean and variance of the resulting gray level histogram are used. Each of the texture features is measured in all channels of the multispectral image, where the number of channels depends on the number of targeted antibodies. For the samples analyzed 3 channels are used. Thus, 18 LBP features and 48 Gabor features for each channel available are extracted. The number of extracted morphological features is between 4 and 5, depending on the location of the antibody, since size of the cytoplasm can only be calculated if a channel representing cytoplasm is available. The number of features extracted from the gray level histogram of the cropped raw images is between 4 and 8, depending on the marker expression pattern as well as on the availability of a cytoplasm channel. All of the features are normalized according to mean and standard deviation.

To generate an ISP, the feature space is projected on two dimensions selected by the operator. Then, the observations are plotted in a scatterplot. In contrast to commonly used scatterplots, the cropped images are plotted, see Figure 1E. To enable the operator to gate cellular populations, the features being most discriminative for the characterization of the different populations, including morphological and gray level histogram features and not texture features, are chosen and assigned to the axes of the ISP. To obtain the most discriminative features, the operator selects different features for both of the ISP axes repeatedly until obtaining a projection where populations are well separated. In addition to the selected features, the first two principal components of the feature vector can be chosen as axis for the ISP. The operator can choose the opacity as well as the pseudo-color for each channel of the multispectral image in order to highlight the antibody channel of interest.

Once the two suitable axes are chosen, the gate can be drawn in the ISP. Setting a gate is equal to declaring a region containing a population of interest. While setting the gate, the observations being inside the gate are assigned to one class, while all of the other observations are assigned to another class, see Figure 1F.

In FCM technology, generally fewer features (up to 20) are used which have high dynamic range and discriminative power. In contrast, in FM imaging technology a large number of relatively weak FM features is used (populations tend to overlap in the ISP projections). Because polygonal gates are a coarse selection method they will produce a large number of false assignments. The grade of overlap depends on the antibody used, the cells and the quality of the staining. The misclassified observations can be regarded as outliers and have to be removed from the particular populations. Thus, strategies to detect outliers have to be used and to reassign them to the correct classes to improve classification accuracy. The inventors do not assume simple parametric form of the class-conditional distributions, and thus, they choose a non-parametric approach including a consensus vote of an ensemble of classifiers.

The number of features used ranges from 50 to 220 features, depending on the number of channels used and the features selected by the operator. Sample size used for this type of analysis is between 400 and 5000 observations. Nevertheless, due to the curse of dimensionality the feature space has to be reduced to allow for reliable classifier training.

To reduce the number of features, two methods, principal component analysis (PCA) for feature reduction and Random forests (RDF) for feature selection were compared. The principal component analysis (PCA) is performed using the first 15 eigenvectors for projection, covering more than 95 percent of the variance, for both samples analyzed. RDF trees are grown on bootstrap samples randomly created on the dataset, the method is called Bagging (bootstrap aggregation) (L. Breiman. Random forests. Machine learning, 45(1):5-32, 2001). To obtain a measure indicating the importance of the distinct features, observations not being part of the bootstrap sample (out-of-bag observations) used to create a specific tree are predicted. The increase in prediction error when permuting the out-of-bag observations for prediction is the measure of importance averaged over the ensemble of trees and normalized according to the standard deviation over the ensemble.

The parameters of the RDF are set according to a minimal leaf size of 10 and an ensemble of 40 trees. Since the inventors are only interested in calculating the feature importance, they do not take into account generalization performance of the ensemble of trees. Due to instabilities in the feature importance measure for repeated RDF constructions, they performed the RDF growing 10 times and only kept features for which the overall mean of the importance was above zero. They assume that those features have a positive importance and thus are useful for discriminating the cellular populations.

For validation of the present invention, the samples have ground-truth generated by biologists. They contain two types of cells, the aim is to separate the two cellular populations. Assuming no other cellular populations are present in the sample, a k-means clustering is performed on the RDF or PCA reduced feature space using *k*=2. The accuracy of k-means is tested within 15 runs using random initialization on one dataset, resulting in an accuracy below 80 percent in 14 cases. In one attempt an accuracy of about 98 percent is achieved indicating the convergence in a global minima. When choosing the class means of the manual labeled classes for centroid initialization, the k-means was guided to converge into the global minima.

The subject matter of the following items is considered embodiments of the present invention.
1. Method for analyzing assorted cell populations from a biological sample using fluorescence microscopy images, comprising the sequential steps:
   a) providing a set of cropped images of separate/single cells, in which cells are tagged with at least two target markers, each target marker corresponding to one or more specific feature(s) of interest and having a specific fluorescence signal channel,
   b) selecting two features of interest and at least one corresponding fluorescence signal channel and plotting the corresponding cellular images against the x and y-axes to obtain an image scatter plot,
   c) applying a gate, specifically a manual gate, to select a set of images displaying a cell population class of interest,
   d) applying a machine learning refinement classifier and optionally
   e) selecting one or two specific features different from step b and plotting the corresponding cellular images against the x and y-axes to obtain an image scatter plot, and optionally
   f) applying a manual gate to select a set of images displaying a cell population class of interest, and
   g) applying a machine learning refinement classifier,
   h) optionally repeating steps e) to g),
   i) obtain a final set of images of selected population classes representing all specific features of interest, and
   j) analyzing the cell populations according to the specific features.
2. Method for analyzing assorted cell populations from a biological sample by fluorescence microscopy, comprising the sequential steps:
   a) fluorescence tagging of the cells using selective target markers, each target marker corresponding to one or more specific feature(s) of interest and having a specific fluorescence signal channel,
   b) subjecting said cells to fluorescence microscopy and generating multispectral images,
   c) selecting separated cells by image segmentation based on one or more specific fluorescence signal channel(s),
   d) cropping said images to obtain a set of images of said separated cells,
   e) selecting two of specific features and plotting the corresponding cellular images against the x and y-axes to obtain an image scatter plot,
   f) applying a manual gate to select a set of images displaying a cell population class of interest,
   g) applying a machine learning refinement and optionally
   h) selecting one or two specific features different from step e) and plotting the corresponding cellular images against the x and y-axes to obtain an image scatter plot, and optionally
   i) applying a manual gate to select a set of images displaying a cell population class of interest,
   j) applying a machine learning refinement,
   k) optionally repeating steps h to j),
   l) obtain a final set of images of selected population classes representing all specific features of interest, and
   m) analyzing the cell populations according to the specific features.
3. Method according to item 1 or 2, wherein the manual gate is a polygon defining an area on the scattered image plot classifying the cell population of interest which can be located within or outside the polygon.
4. Method according to any one of items 1 to 3, wherein the most discriminative features are assigned to the x and y-axes of the image scatter plot.
5. Method according to any one of items 1 to 4, wherein the most discriminative features displayed on the first image scatter plot are nucleus and/or cytoplasm segmentation.
6. Method according to any one of items 1 to 5, wherein cells having similar features are positioned close to each other in the image scatter plot.
7. Method according to any one of items 1 to 6, wherein each specific feature or a combination of features of said cells displayed in the image scatter plot is marked by a colored rectangle.
8. Method according to any one of items 1 to 7, wherein machine learning refinement classifiers are using n-fold cross validation in combination with an ensemble of classification methods selected from Random Forests, Support Vector Machines or k-Nearest Neighbors, Principal Component Analysis (PCA), Linear Discriminant Analysis (LDA) or boosting procedures like AdaBoost.
9. Method according to any one of items 1 to 8, wherein the specific features are selected from morphological features and features of gray level histogram.
10. Method according to any one of items 1 to 9, wherein the morphological features of the cells are roundness, perimeter, object size, solidity of cells.
11. Method according to item 10, wherein 1, 2, 3, 4 or more different morphological features are selected.
12. Method according to any one of items 1 to 11, wherein the features of the gray level histogram are selected from mean intensity, median intensity and mean of 30% of brightest pixels.
13. Method according to item 12, wherein 1, 2, 3, 4, 5, 6, 7, 8, 9, 10, or more features are selected from gray level histogram.
14. Method according to any one of items 1 to 13, wherein the gray level histogram is based on pixels having a distance of more than 2 pixels to the border of the cell nucleus or the cell cytoplasm.
15. Method according to item 9 and 14, wherein texture features are extracted from gray level histogram of the images after applying an operator (local binary patterns) or a filter kernel (Gaussian wavelets), specifically the mean and variance of gray level histogram.
16. Method according to any one of items 1 to 15, wherein the specific features are selected by determining selection values, specifically random forests (RDF) or principal component analysis.
17. Method according to item 16, wherein the features are selected using RDF, specifically by setting the parameters of the RDF to a minimal leaf size of 10 and an ensemble of 40 trees and growing the RDF 10 times and selecting the features having an overall mean of importance of >0.
18. Method according to any one of items 1 to 17, wherein the target markers are antibodies specific to cellular targets, DNA dyes, fluorescent probes specific for DNA sequences, fluorescent dyes specific for certain cellular components or compartments.
19. Method according to any one of items 1 to 18, wherein the biological sample can be tissue, body fluid, cells from cell culture or extracted cellular compartments thereof.
20. Method according to any one of items 1 to 19, wherein cells not comprising a specific feature are discriminated from the image scatter plot.
21. Method according to any one of items 1 to 20, wherein features are selected using an algorithm consisting of statistical methods specifically principal component analysis.

### Examples

The Examples which follow are set forth to aid in the understanding of the invention but are not intended to, and should not be construed to limit the scope of the invention in any way. The Examples do not include detailed descriptions of conventional methods, e.g., cytospin preparation, staining, etc. Such methods are well known to those of ordinary skill in the art.

### Example 1

The first sample (dataset 1, number of observations *n*=509) contains images of a co-culture of N cells (neuroblastoma cells) and F cells (flat cells). The cells were marked using GD2, a tumor marker expressed in nearly all neuroblastoma cells, and CD44, a cellular surface molecule associated with certain activities of cancer cells. After applying the RDF for feature reduction, the feature space was reduced from 220 to 17 features. The results are presented in Table 1.

**Table 1. Comparison of accuracies for the different strategies on dataset 1**

| Feature reduction | Accuracy (in %) | | |
|---|---|---|---|
| | manual | k-means | majority vote |
| | | 98.82 | 98.43 |
| PCA | 97.45 | 98.82 | 98.62 |
| RDF | | 98.23 | 97.45 |

### Example 2

The second sample (dataset 2, *n*=468) contains Schwann cells (cells of the peripheral nervous system) and F cells. The cells were marked using Vimentin, outlining the cytoskeleton and present in all of the cells, and S100, a Schwanncell marker preferentially expressed in Schwann cells. After applying the RDF for feature reduction, the feature space was reduced from 205 to 34 features. The results are presented in Table 2.

**Table 2. Comparison of accuracies for the different strategies on dataset 2.**

| Feature reduction | Accuracy (in %) | | |
|---|---|---|---|
| | manual | k-means | majority vote |
| | | 89.96 | 93.80 |
| PCA | 94.02 | 89.96 | 94.66 |
| RDF | | 80.98 | 96.15 |

As is obvious, the manual labeling already achieves high accuracy of 97.45% and 94.02%, respectively. Since the gating procedure is supported by the cropped images in the ISP, the biologist is enabled to include morphology information and antibody appearance in the process of gating. The two methods, k-means and majority vote, represent unsupervised clustering and outlier removal. The k-means clustering is not unsupervised in general, since it is initialized using the means of the manually labeled classes, and thus, operator interaction is incorporated. Based on the used two datasets, majority vote is more robust than clustering. When using appropriate feature selection, the results are excellent for dataset 2.

### Example 3

To compare the proposed method to a state-of- the-art cytometry analysis method, an analysis on a neuroblastoma sample (dataset 3, *n=* 1142) is performed and compared to FCM results. CD44 and GD2 are used for antibody staining, as in dataset 1. In contrast to the analysis of dataset 1 and 2, the aim was to determine the number of cells positive for a certain antibody. A cell is positive for an antibody if the marker expression pattern is significantly expressed, in the subjective impression of the operator. Thus, four populations have to be classified (GD2 positive, GD2 negative, CD44 positive and CD44 negative cells) outperforming the use of k-means with *k*=2. Due to the results for dataset 1 and 2, the inventors decided to use the majority vote for automated class label correction.

To label CD44 positive cells, the first and the second principal component were set on the ISP axes and the gating was performed subsequently. A cell was declared to be positive for CD44 (and thus, included in the gate) if the mean intensity of the antibody passed a certain threshold, declared by the operator. In contrast, GD2 was more difficult to analyze. GD2 positive cells appear with a granular surface staining, especially in the region of the cell membrane since GD2 is a cellular surface marker. Hence, cells can be negative for GD2 even if the mean intensity is rather high. To label GD2 positive cells (and thus, GD2 negative cells were outside the gate), the inventors chose the mean of the 30 percent of brightest pixels in the nucleus versus the mean of the 30 percent of brightest pixels on the cell membrane for the ISP axes. Finally, majority vote on the PCA was used to reduce feature space to correct for overlapping populations for both antibodies analyzed. The analysis procedure is presented in Figure 2, the results are displayed in Table 3.

**Table 3. Results of antibody quantification for GD2 and CD44 on dataset 3.**

| Antibody stained | Positivity: ratio of population (in %) | | |
|---|---|---|---|
| | initial gate | majority vote | FCM ref. |
| GD2 | 79.25 | 82.31 | 85.8 |
| CD44 | 18.04 | 16.81 | 15.3 |

As underlined by the results, the analysis procedure is comparable to state-of-the-art FCM analysis with the advantage of directly visualizing the cellular features. Furthermore, the results underline the benefit of incorporating manual input and using majority vote to correct for overlapping cellular populations.

### Example 4 - Analysis of the tumor marker expression located in cytoplasm

An example is given of how a sample of STANB10-cells stained with DAPI (visualizing DNA stain representing nuclear information), TRITC (visualizing tumor marker CD57), FITC (visualizing tumor marker GD2) and DEEPRED (visualizing cytoplasmic information) is analyzed. To generate the feature matrix, nuclear segmentation was performed on DAPI images, cytoplasm segmentation was performed on DEEPRED images. Calculated features are:
- Nuclear pixelcount and roundness to exclude possible remaining clustered nuclei from the analysis
- Cytoplasm pixelcount to exclude cells showing improper cytoplasm segmentation
- Mean signal intensity for both antibody channels
- Brightest 30-percent of pixels for both antibody channels.
To illustrate the gating strategy, images of 5 percent of all cells (of 8227 in total) are loaded to the scatterplot. First, it is searched for segmented objects, where either nucleus segmentation or cytoplasm segmentation did not perform well. Although the amount of partially or wrongly segmented objects by manual nucleus selection is minimized, there are still some of these objects remaining (depending on the cell line, these are between 4 and 10 percent of all analyzed cells). The inventors start with creating an image-scatterplot, plotting images sorted by feature 'nucleus pixelcount' on the x-axis and feature 'cytoplasm (DEEPRED) pixelcount' on the y-axis, see Figure 4.

Only clipped images of the nucleus channel are plotted, since this channel displays the information of interest. As it can be seen, there are some images showing clustered nuclei or large cytoplasm regions. Most of these images are the result of incorrect cytoplasm segmentation. Next the operators zoom in and set a gate to determine correctly segmented nuclei, also excluding nuclei having a cytoplasm pixelcount of zero (no cytoplasm available), see Figure 5.

Cells included in the created gate are called 'correctSegmentedNuclei'. The correctness of the gating strategy can be proven by suppressing all cells not belonging to the class 'correctSegmentedNuclei', see Figure 6.

Next a gate for GD2-positive cells is applied. Clipped images of channel GD2 are plotted, sorted by the feature 'DAPI pixelcount' on the x-axis and the feature 'GD2 mean intensity' on the y-axis. Since most of the cells express GD2, the operators focus on the few GD2-negative cells, because setting this gate is easier. The gate is displayed in Figure 7. The resulting population of cells is named 'GD2-'.

To determine GD2 positive cells, GD2 negative cells from cells of class correctSegmentedNuclei are subtracted. Cells of this population are called GD2+, see Figure 8.

To determine CD57 positive cells, the same procedure is performed as for determining GD2 positive cells (but clipped images of CD57 channel are displayed to set the gate). Result is shown in Figure 9.

To determine the amount of double positive cells (expressing both CD57 and GD2), intersection of GD2 positive and CD57 positive cells are calculated, see results in Figure 10. The ratio of the respective populations in comparison to cells of class correctSegmentedNuclei can immediately be retrieved from the legend, in this example a ratio of 99 percent GD2 positive, 52.07 percent CD57 positive and 51.97 percent double positive cells is obtained. 93.68 percent of cells are used for analysis, 6.32 percent are excluded from analysis due to incorrect nuclear or cytoplasm segmentation.

### Example 5 - Analysis of γH2AX foci located in the nucleus

To learn about the influence of different drugs on the number of DNA double strand breaks visualized by γH2AX stainings, the number of spots and mean intensity are quantified. In the following, the inventors want to compare means of spotcount and mean intensity between multiple samples in order to prove for effects of treatment. The feature mean intensity is more robust than the feature spotcount. The feature spotcount is less robust because it is not representative for calculating the true spotcount of very bright shining nuclei, but is more objective, because more robust to differences in staining quality or spot intensities.

γH2AX samples are analyzed as follows:
- First a gate for correctly segmented nuclei is set, as described for the process of tumor marker quantification in the preceding section.
- To calculate the mean intensity, no more gates to set.
- To calculate the spotcount, we set a gate to withdraw bright shining cells, distorting mean of spotcount of all nuclei, but keep the amount of withdrawn cells.
- Last, boxplots of the features mean intensity and spotcount are created to compare them in order to give a statement on effects of treatment.

In this section, the inventors have presented how localization of antigen expression influences the calculation of features. Furthermore, they have shown the strategy for analyzing the feature matrix with respect to biological questions. To do so, they proposed a novel gating strategy based on image-scatterplots. This method enables to gate for common properties using clipped images of single cells, visualizing one or more combined marker channels, depending on the property to be analyzed. This method bears tremendous advantages compared to the analysis of FCM data, since the additional visualization of nucleus morphology and antigen expression instead of dots facilitates the analysis process enormously.

Results from visual inspection of the raw yH2AX images of experiment 3 by a researcher correspond to evaluation of the spotcount, rather than of the mean intensity. This was also true for the other 2 experiments (see Figures 11, 12 and 13).

### DISCUSSION

The ISP method provides the operator with a valuable tool for cellular population quantification by incorporating morphology and marker expression patterns in the process of analysis. The use of ISPs compensate for the lower discriminative power of FM features when compared to FCM features. Furthermore, using the ability of calculating morphological, gray level histogram and textural features supports in splitting overlapping populations. The comparison of the results of majority vote to those of automated clustering indicates the effectiveness of incorporating operator input for cellular population quantification.

Comparing k-means and majority vote for automated class label correction, the use of majority vote is favorable based on the current samples. The current results based on the investigated features are promising for an application to a similar type of samples.

## Claims

1. Method for analyzing assorted cell populations from a biological sample using fluorescence microscopy images, **characterized in that** the method comprises the sequential steps:
a) providing a set of cropped images of single cells, which cells are tagged with at least two target markers, each target marker corresponding to one or more specific feature(s) of interest and having a specific fluorescence signal channel,
b) selecting two features of interest and at least one corresponding fluorescence signal channel and plotting the corresponding cellular images against the x and y-axes to obtain an image scatterplot,
c) applying a gate, specifically a manual gate, to select a set of images displaying a cell population class of interest,
d) applying a machine learning refinement classifier and optionally
e) selecting one or two specific features different from step b and plotting the corresponding cellular images against the x and y-axes to obtain an image scatterplot, and optionally
f) applying a gate, specifically a manual gate, to select a set of images displaying a cell population class of interest, and
g) applying a machine learning refinement classifier,
h) optionally repeating steps e) to g),
i) obtaining a final image scatterplot of the cell population representing all selected specific features of interest, and optionally
j) analyzing the cell populations according to the specific features.

2. Method according to claim 1, wherein the applied gate is a polygon defining an area on the scattered image plot classifying the cell population of interest.

3. Method according to claim 1 or 2, wherein the selected specific features displayed on the first image scatterplot are nucleus and/or cytoplasm segmentation.

4. Method according to any one of claims 1 to 3, wherein each specific feature or combination of specific features of said cells displayed in the image scatterplot is marked by a colored rectangle.

5. Method according to any one of claims 1 to 4, wherein the machine learning refinement classifiers are using n-fold cross validation in combination with classification methods selected from Random Forests, Support Vector Machines or k-Nearest Neighbors, optionally appliying a preceding step of feature reduction using Principal Component Analysis (PCA), Linear Discriminant Analysis (LDA) or boosting procedures like AdaBoost

6. Method according to any one of claims 1 to 5, wherein the specific features are selected from morphological features and features of gray level histogram.

7. Method according to claim 6, wherein the morphological features of the cells are roundness, perimeter, object size, and/or solidity of cells.

8. Method according to claim 6 or 7, wherein the features of the gray level histogram are selected from mean intensity, median intensity and mean of 30% of brightest pixels.

9. Method according to any one of claims 6 to 8, wherein the gray level histogram is based on pixels having a distance of more than 2 pixels to the border of the cell nucleus or the cell cytoplasm.

10. Method according to claim 6, wherein texture features are extracted from gray level histogram of the images after applying an operator (local binary patterns) or a filter kernel (Gaussian wavelets), specifically the mean and variance of gray level histogram.

11. Method according to any one of claims 1 to 10, wherein the specific features are selected by determining selection values, specifically random forests (RDF) or principal component analysis.

12. Method according to claim 11, wherein the features are selected using RDF, specifically by setting the parameters of the RDF to a minimal leaf size of 10 and an ensemble of 40 trees and growing the RDF 10 times and selecting the features having an overall mean of importance of >0.

13. Method according to any one of claims 1 to 12, wherein the target markers are antibodies specific to cellular targets, DNA dyes, fluorescent probes specific for DNA sequences, fluorescent dyes specific for certain cellular components or compartments.

14. Method according to any one of claims 1 to 13, wherein the biological sample can be tissue, body fluid, cells from cell culture, or extracted cellular compartments thereof.

15. Method according to any one of claims 1 to 14, wherein the features are selected using an algorithm consisting of statistical methods.
